(19) **Europäisches Patentamt**
**European Patent Office**
**Office européen des brevets**

(11) **EP 2 451 206 A1**

(12) **EUROPEAN PATENT APPLICATION**
published in accordance with Art. 153(4) EPC

(43) Date of publication:
**09.05.2012 Bulletin 2012/19**

(21) Application number: **10788996.6**

(22) Date of filing: **29.06.2010**

(51) Int Cl.:
**H04W 28/08** (2009.01)

(86) International application number:
**PCT/CN2010/074682**

(87) International publication number:
**WO 2010/145600 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.06.2009 CN 200910151505**

(71) Applicant: **ZTE Corporation**
**Shenzhen, Guangdong 518057 (CN)**

(72) Inventors:
• **WANG, Chen**
**Guangdong 518057 (CN)**

• **XU, Haiyan**
**Guangdong 518057 (CN)**
• **SHEN, Wei**
**Guangdong 518057 (CN)**
• **DING, Jiewei**
**Guangdong 518057 (CN)**

(74) Representative: **Bruck, Mathis**
**Office Ernest T. Freylinger S.A.**
**BP 48**
**8001 Strassen (LU)**

(54) **METHOD AND SYSTEM FOR CONTROLLING UPLINK RATE**

(57)    The present invention discloses a method and a system for controlling uplink rate, wherein the method for controlling uplink rate includes the following steps of: judging whether a multi-path interference condition is satisfied according to the number of antennae of a cell and the number of multi-paths of a user equipment; judging whether a difference between an estimated signal-to-noise ratio value and a target signal-to-noise ratio value exceeds a normal signal-to-noise ratio error range; and reducing the uplink rate of the user equipment in the case that the multi-path interference condition is satisfied and/or the normal signal-to-noise ratio error range is exceeded. In the present invention, the existing load control algorithm is modified by using the multi-path information and the SIR information of the user equipment at uplink in the WCDMA system, thereby preventing the occurrence of load calculation error and improving the stability of uplink HSUPA scheduling.

Fig.3

**Description**

**Technical field of the present invention**

The present invention relates to the field of communication, and in particular to a method and a system for controlling uplink rate.

**Background of the present invention**

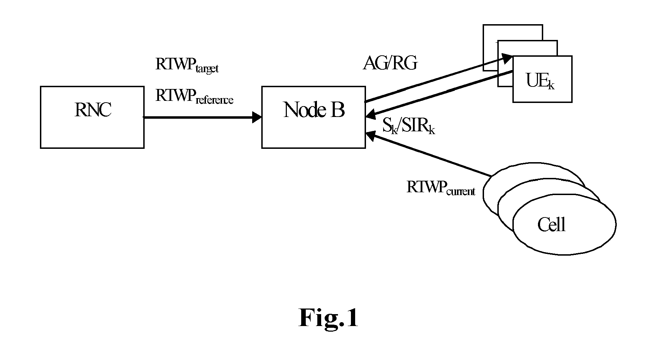

A wideband code division multiple access (WCDMA) system is a CDMA based wideband cellular radio communication system, which supports more service types and is capable of transporting services with higher data rate. High speed uplink packet access (HSUPA), as an enhanced technology for uplink transmission capability in the WCDMA system, includes a shorter transmission time interval (TTI), a node B based scheduler and a hybrid automatic retransmission request (HARQ). These key technologies are employed by a new transmission channel, enhanced dedicate channel (E-DCH). Compared with the conventional WCDMA version, the HSUPA system has an obvious improvement in the transmission performance of uplink services, an increment of about 50%-70% in system capacity, a reduction of about 20%-55% in the delay of end-to-end packet and an increment of about 50% in the user packet call traffic. The WCDMA system utilizing the HSUPA technology includes a radio network controller (RNC), a node B and user equipment (UE). In the above, the node B includes a number of cells, each of which serves UEs within one region as a common radio resource in the system; in the HSUPA, the uplink load degree of the system can be measured through a cell; and the scheduling of the node B to the UE is accomplished with the cell as a unit. In the HSUPA, the function of controlling and scheduling a user service is provided in the node B, which sends different grants to different UEs according to the scheduling request of the user service, the buffer occupancy status of the user service, the priority of service flow, the uplink interference and load of the cell and the processing capability of the base station; then the UE selects, according to the grants from the node B, a proper enhanced transport format combination (E-TFC) from an enhanced transport format combination (E-TFC) table preset for the UE by the RNC, and sends to the node B the data with size corresponding to the grants by utilizing the power offset corresponding to the E-TFC. For the functional structure of the HSUPA system, refer to Fig. 1.

In the HSUPA, grants are classified into absolute grants (AG) and relative grants (RG), wherein AG specifies the absolute size of the transmission power ratio corresponding to the data amount allowed to be sent by the UE, RG specifies the relative size of the transmission power ratio allowed for the UE, and this relative size is expressed by a step and can take a value from UP (raising scheduling amount by a step), DOWN (lowering scheduling amount by a step) and HOLD (holding current scheduling amount). The UE sends, according to the grants from the node B, data with size corresponding to the grants to the node B within a transmission time interval (TTI).

The WCDMA system is a multi-user CDMA radio system. Since the transmission time of the UE at uplink is asynchronous in a cell of the WCDMA system, the uplink transmission channels between different UEs are non-orthogonal, which leads to the interference of the uplink transmission signals of different UEs. Therefore, the more transmission channels of the UE at uplink or the greater transmission power of the UE exist in the cell, the stronger uplink interference occurs in the system. The interference degree is expressed by a received total wideband power (RTWP) which is an index of the uplink interference in the WCDMA. The uplink load of the system can be calculated according to a rise over thermal (RoT), which is a ratio of uplink received total power to thermal noise of the cell, as follows:

Formula 1:

$$RoT_{current} = \frac{RTWP_{current}}{RTWP_{reference}} = \frac{1}{1 - Cell\_load_{current}}$$

Formula 2:

$$Cell\_load_{current} = 1 - \frac{1}{RoT_{current}}$$

In the HSUPA, the RNC configures $RTWP_{target}$ and $RTWP_{reference}$ of each cell as the control target of the load and background noise reference according to the requirements of network plan.

Formula 3:

$$RoT_{t\arg et} = \frac{RTWP_{t\arg et}}{RTWP_{reference}} = \frac{1}{1 - Cell\_load_{t\arg et}} \; ;$$

Formula 4:

$$Cell\_load_{t\arg et} = 1 - \frac{1}{RoT_{t\arg et}} \; .$$

The load of the cell can be mapped to the sum of the loads generated by each UE (H.Holma and A.Toskala WCDMA for UMTS. John Wiley & Sons):

Formula 5:

$$Cell\_load = \sum_{i=1}^{N} L_i \; ;$$

in which, $L_i$ represents the load of the $i^{th}$ UE in the cell, and N represents the number of the UEs in the cell.

The operation of the WCDMA system requires to control the load L of each UE and to hold the load of uplink within a reasonable load threshold; otherwise, the system would collapse or a lot of call drop would occur to the UE due to the power rising caused by interference overload.

Therefore, in order to effectively control the occurrence of uplink interference overload by a scheduler, in the high speed uplink packet access service, it is necessary for the base station to schedule the uplink load resources usable for each terminal, such that each terminal can make full use of the uplink radio resources more reasonably and sufficiently according to predetermined rules.

The calculation accuracy of the load $L_i$ of the UE, which depends on the estimation accuracy of $SIR_i$, has a big influence to the scheduler performance. Take the wideband code division multiple access (WCDMA) system designed by the 3GPP organization as an example, in the service of R99 and R5 version, due to a relatively large uplink spread spectrum gain, the power (the power received at antenna interface) needed by uplink channel demodulation is often less than the power of interference noise. The interference noise to a UE signal is mainly caused by the background noise and the interference of other users or other cells, other than the interference between the multiple paths of the UE signal itself.

Therefore, the load estimation algorithm in R99 and R5 is usually as follows:

provided that the uplink signal-to-noise ratio of the $i^{th}$ UE is $SIR_i$, the received power at the base station is $P_i$, the received interference of the cell is $I_{roral}$, then the following formulas can be concluded:

Formula 6: $\; SIR_i = \dfrac{P_i}{I_{total} - P_i} \; ;$

Formula 7: $\; P_i = \dfrac{SIR_i}{1 + SIR_i} I_{total} \; ;$

defining:

$$\text{Formula 8}: \quad P_i = L_i I_{total};$$

in which, $L_i$ is the load factor of the $i^{th}$ UE, then Formula 9 can be concluded:

$$\text{Formula 9}: \quad L_i = \frac{SIR_i}{1 + SIR_i}.$$

In the above deduction, it does not distinguish the mutual interference of all paths of the same UE, and the formulas can only be fulfilled approximately in the premise that the interference I of each path is very small relative to other noises N. However, in the HSUPA service of R6 version, in order to support a high speed uplink service, the power of one UE might be relatively high, even higher than that of noise N, that is, this UE probably takes up most of the uplink resources and its load might exceed 0.5. Since the signal energy of the UE is very large, the paths will interfere with each other and the interference energy will be heavily influenced by the multi-path signal energy. For example, the energy distribution on an antenna shown in Fig, 2 is as follows: provided noise N=1, the first path energy Plant=2, the second path energy P2ant=3, then the real value of SIRant should be (2+3)/1=5, the corresponding UE has L=5/6=0.83; during the demodulation process, the first path has an interference I1ant=P2ant+N=4, the second path has an interference I2ant=Plant+N=3. The interference is greater than N and the interferences of the two paths are different. By using the SIR estimation algorithm principle above, it is obtained that SIRant=5/((3+4)/2)=1.43, and the corresponding UE has a load L=0.59 which is far different from the real value. It can be concluded that the UE load estimated by the load calculating method often applied in R99 and R5 will have a big error if the single antenna of the cell receives more than one path, the dual antennae of the cell receive more than two paths and the signal energy is relatively high.

When multi-paths appear and the energy thereof is large, the current SIR has an estimated value less than a real value, the difference between estimated SIR value and target SIR value is increased, therefore, a transmission power control (TPC) command will be sent during the inner-loop power control process to continuously increase the uplink transmission power of the UE, thereby causing a rapid increase of real SIR of the UE and the generation of a lot of uplink interference.

Meanwhile, since the UE load estimated by the existing SIR algorithm is less than the actually generated load of the UE, the HSUPA scheduler would underestimate the load and allocate more load to other UEs, thereby causing a load over-allocation and a cell overload; in the case of cell overload, the scheduler would rapidly send a scheduling command to reduce the grants of the UE so as to control the load of the cell, which will cause the oscillation and instability of the load of the cell.

Therefore, the technical problems to be solved by this invention are that: the error caused by the mutual interference between multiple paths in the calculation of the load of the UE is relatively large and thus the load control is instable.

## Summary of the present invention

In view of one or more problems above, the present invention provides a method and a system for controlling uplink rate, thereby stably controlling the rate of the UE (equivalent to controlling load).

According to one aspect of the present invention, a method for controlling uplink rate is provided, comprising the following steps of: judging whether a multi-path interference condition is satisfied according to the number of antennae of a cell and the number of multi-paths of a user equipment; judging whether a difference between an estimated signal-to-noise ratio value and a target signal-to-noise ratio value exceeds a normal signal-to-noise ratio error range; and reducing the uplink rate of the user equipment in the case that the multi-path interference condition is satisfied and/or the normal signal-to-noise ratio error range is exceeded.

In which, the step of judging whether the multi-path interference condition is satisfied according to the number of antennae of the cell and the number of multi-paths of the user equipment comprises: determining a threshold of the number of the multi-paths according to the number of the antennae, and judging whether the number of the multi-paths is greater than the threshold of the number of the multi-paths; and if the number of the multi-paths is greater than the threshold of the number of the multi-paths, determining that the multi-path interference condition is satisfied.

In which, the step of reducing the rate of the user equipment comprises: in the case that the number of the antennae is 1, making the rate of the user equipment equal to a constant first rate; and in the case that the number of the antennae is 2, making the rate of the user equipment equal to a constant second rate; wherein the first rate is less than the second rate.

The method further comprises the steps of: starting a timing procedure in the case that the multi-path interference condition is not satisfied anymore and the normal signal-to-noise ratio error range is not exceeded due to the rate reduction of the user equipment; and gradually increasing the rate of the user equipment in the case that a timing value reaches a predetermined time threshold.

In which, the timing procedure comprises a step of: increasing the value of the timer set in the UE by 1 at a predetermined interval.

In which, the step of gradually increasing the rate of the user equipment comprises: increasing progressively the first rate or the second rate at predetermined time intervals; and when the progressively increased first rate or second rate is greater than an upper limit value of the rate, setting the first rate or the second rate as the upper limit value of the rate.

According to another aspect of the present invention, a system for controlling uplink rate is provided, comprising: a multi-path interference judgement module, configured to judge whether a multi-path interference condition is satisfied according to the number of antennae of a cell and the number of multi-paths of a user equipment; a signal-to-noise ratio judgement module, configured to judge whether an absolute value of a difference between an estimated signal-to-noise ratio value and a target signal-to-noise ratio value exceeds a normal signal-to-noise ratio error range; and a rate control module, configured to reduce the uplink rate of the user equipment in the case that the multi-path interference condition is satisfied and/or the normal signal-to-noise ratio error range is exceeded.

In which, the multi-path interference judgement module comprises: a threshold judgement module, configured to determine a threshold of the number of the multi-paths according to the number of the antennae, and judge whether the number of the multi-paths is greater than the threshold of the number of the multi-paths; and a determination module, configured to determine that the multi-path interference condition is satisfied if the number of the multi-paths is greater than the threshold of the number of the multi-paths.

In which, the rate control module comprises: a first rate control module, configured to make the rate of the user equipment equal to a constant first rate in the case that the number of the antennae is 1; and a second rate control module, configured to make the rate of the user equipment equal to a constant second rate in the case that the number of the antennae is 2; wherein the first rate is not equal to the second rate.

The system further comprises: a timing module, configured to start a timing procedure in the case that the multi-path interference condition is not satisfied anymore and the normal signal-to-noise ratio error range is not exceeded due to the rate reduction of the user equipment; and a rate readjustment module, configured to gradually increase the rate of the user equipment in the case that a timing value reaches a predetermined time threshold.

In which, the rate-limiting release module comprises: a rate increasing module, configured to increase progressively the first rate or the second rate at predetermined intervals; and a rate setting module, configured to set, when the progressively increased first rate or second rate is greater than an upper limit value of the rate, the first rate or the second rate as the upper limit value of the rate.

In the present invention, the existing load control algorithm is modified by using the multi-path information and the SIR information of the user equipment at uplink in the WCDMA system, thereby preventing the occurrence of load calculation error and improving the stability of uplink HSUPA scheduling.

Other features and advantages of the present invention will be described in the following description and partly become obvious from the description, or be understood by implementing the present invention. The objects and other advantages of the present invention can be realized and obtained through the structures indicated by the description, claims and drawings.

## Brief description of the drawings

Drawings, provided for further understanding of the present invention and forming a part of the specification, are used to explain the present invention together with embodiments of the present invention rather than to limit the present invention, wherein:

Fig. 1 is a structural diagram of a WCDMA radio network;

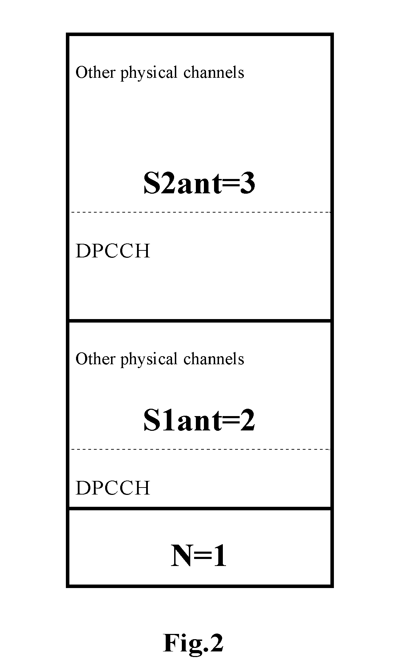

Fig. 2 is a distribution diagram of received energy of UE antenna according to an embodiment of the present invention;
Fig. 3 is a flowchart of a method for controlling uplink rate according to an embodiment of the present invention;
Fig. 4 is a flowchart of the steps according to another embodiment of the present invention;
Fig. 5 is a block diagram of a system for controlling uplink rate according to an embodiment of the present invention; and
Fig. 6 is a diagram of a functional structure according to an embodiment of the present invention.

**Detailed description of the embodiments**

The embodiments of the present invention will be described hereinafter in detail in conjunction with the drawings thereof.

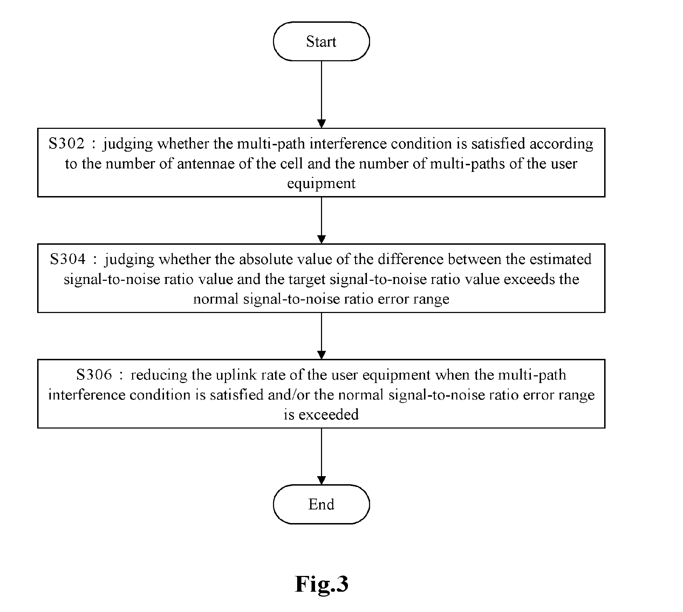

Fig. 3 is a flowchart of a method for controlling uplink rate according to an embodiment of the present invention. As shown in Fig. 3, the method for controlling uplink rate according to the embodiment of the present invention includes the following steps:

step S302, it is judged whether a multi-path interference condition is satisfied according to the number of antennae of a cell and the number of multi-paths of a user equipment;

step S304: it is judged whether an absolute value of a difference between an estimated signal-to-noise ratio value and a target signal-to-noise ratio value exceeds a normal signal-to-noise ratio error range; and

step S306: the uplink rate of the user equipment is reduced in the case that the multi-path interference condition is satisfied and/or the normal signal-to-noise ratio error range is exceeded.

In the above, step S302 can include the following steps: a threshold of the number the multi-paths is determined according to the number of antennae, and it is judged whether the number of the multi-paths is greater than the threshold of the number of the multi-paths; and if the number of the multi-paths is greater than the threshold of the number of the multi-paths, it is determined that the multi-path interference condition is satisfied.

In the above, the step of reducing the rate of the user equipment can include the following steps: in the case that the number of the antennae is 1, the rate of the user equipment is made to be equal to a constant first rate; and in the case that the number of the antennae is 2, the rate of the user equipment is made to be equal to a constant second rate; wherein, the first rate is not equal to the second rate, that is, the first rate is less than or more than the second rate.

The method further includes the following steps: in the case that the multi-path interference condition is not satisfied anymore and the normal signal-to-noise ratio error range is not exceeded due to the rate reduction of the user equipment, a timing procedure is started; and in the case that a timing value reaches a predetermined time threshold, the rate of the user equipment is gradually increased.

In the above, the timing procedure includes: the value of the timer set in the UE is increased by 1 at a predetermined interval.

In the above, the step of gradually increasing the rate of the user equipment includes the following steps: the first rate or the second rate is increased progressively at predetermined intervals; and when the progressively increased first rate or second rate is greater than an upper limit value of the rate, the first rate or the second rate is set as the upper limit value of the rate.

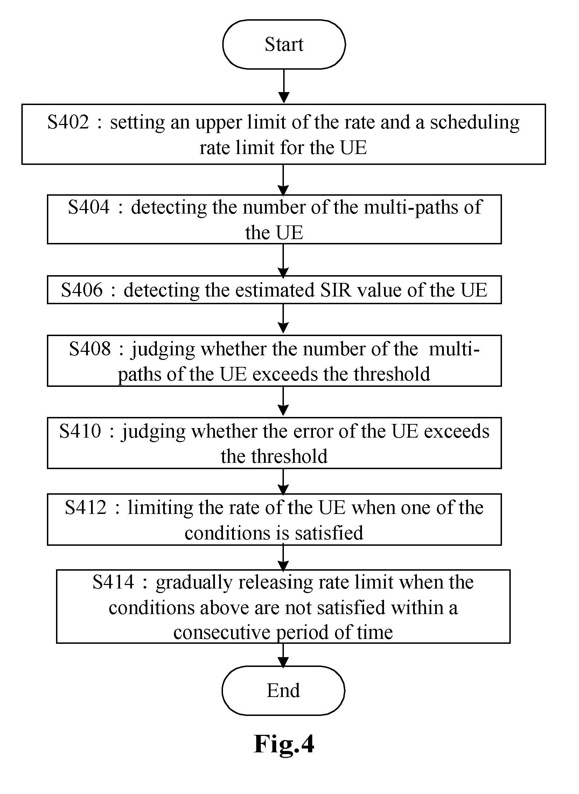

Fig. 4 is a flowchart of a method for controlling uplink rate according to another embodiment of the present invention. As shown in Fig. 4, the method includes the steps as follows.

Step S402: each UE is configured with an upper limit of the rate, Rate_max, whose initial value is the maximum rate supported by this UE; and each UE is configured with a scheduling rate limit, Rate_limit, wherein the initial value of Rate_limit is Rate_max, and when the scheduler is allocating the rate corresponding to grants, the Rate_limit should not be exceeded.

Step S404: the existing multi-path detection algorithm is adopted to detect the number of the multi-paths of the UE.

Step S406: the existing SIR estimation algorithm is adopted to obtain the estimated SIR value.

Step S408: it is judged whether the multi-path interference condition is satisfied according to the number of antennae and the number of multi-paths, wherein the multi-path interference condition is as follows:

the number of the multi-paths received by the single antenna of the cell exceeds M; or

the number of the multi-paths received by the dual antennae of the cell exceeds 2*M;

in which, the threshold M of the number of the multi-paths is an integer greater than 0, and the specific value can be determined by simulation and test.

Step S410: it is judged whether the normal signal-to-noise ratio error range of SIR is exceeded according to the estimated SIR value and the target SIR value;

$$| SIR_{est} - SIR_{target}| > SIR_{err\_norm}$$

in which, $SIR_{est}$ is the estimated value of SIR, $SIR_{target}$ is the target value of SIR, $SIR_{err}$ norm is the normal signal-to-noise ratio error range of SIR; and the specific value can be determined by simulation and test.

Step S412: the load and rate of the UE are controlled when one of the conditions in steps S408 and S410 is satisfied, and the specific control method is as follows:

in the case of single antenna of the cell, the rate of the UE is controlled as Rate_limit = Rate1 when one of the conditions in step S408 or S410 is satisfied;

in the case of dual antennae of the cell, the rate of the UE is controlled as Rate_limit = Rate2 when one of the conditions in step S408 or S410 is satisfied;

a timer Rate_Limit_Timer is set for the UE, and the value is set as 0 when the condition above is satisfied; if the conditions above are not satisfied, every one TTI, Rate_Limit_Timer = Rate_Limit_Timer + 1;

wherein, Rate1 and Rate2 represent the rate limits of the UE when a single antenna and dual antennae are utilized to receive in the cell, respectively; and the specific value can be determined by simulation and test.

Step S414: when both S408 and S410 are not satisfied and a period of time is exceeded, rate control is gradually released, wherein the specific procedure of releasing the rate control includes the steps as follows:

step S414-2: when the Rate_Limit_Timer of the UE is not less than Rate_Limit_Threshold, Rate_Limit = Rate_Limit +0.5kbps,

step S414-4: it is made that Rate_Limit_Timer = 0, then it restarts a timing procedure,

step S416-6: it is judged whether Rate_ limit > = Rate_max is satisfied,

step S414-8: if it is not satisfied, return to step S414-2; and if it is satisfied, Rate_Limit = Rate_max;

wherein, Rate_Limit_Threshold is the hysteresis threshold of rate limit, which is used for preventing the fluctuation in the rate and load of the UE due to instable multi-path interference condition, wherein if the multi-paths are incidentally eliminated, the rate of the UE will be rapidly increased; and if the multi-paths appear, the rate of the UE will be rapidly reduced, thereby causing a rate fluctuation. The specific value of Rate_Limit_Threshold can be determined by simulation and test. In the embodiment, in the case of receiving by a single antenna in a cell, the maximum rate capacity of the UE is 5.76Mbps, and the multi-path energy of the UE is as shown in Fig. 1: provided noise N = 1, the first path energy P1ant = 2, the second path energy P2ant = 3, then the real value of SIRant should be (2+3)/1 = 5, the corresponding UE has L= 5/6 = 0.83; during the demodulation process, the first path has an interference I1ant = P2ant+N = 4, the second path has an interference I2ant = P1ant+N = 33.

The embodiment above will be further illustrated hereinafter.

According to step S402, the upper limit of the rate configured for the UE is Rate_max = 5.76Mbps, then the scheduling rate limit configured for the UE is Rate-limit = 5.76Mbps.

According to step S404, according to the multi-path detection algorithm, it is detected that the number of the multi-paths is 2.

According to step S406, the estimated SIR value is 1.43, while the target value corresponding to the real SIR value is 5.

According to step S408, since there is only one antenna in the cell, the threshold M of the number of the multi-paths is 1, the number of the multi-paths of the UE is 2, therefore, the result satisfies the multi-path condition.

According to step S410, the normal error range of the SIR usually is 2, and the actually measured error is 5 - 1.43 =3.57, then it is judged that the condition that the SIR exceeds the normal error range is satisfied.

According to step S412, since the UE satisfies the conditions of steps S408 and S410 and a single antenna is utilized to receive in the cell, then the Rate_limit of the UE is set as 1.8Mbps (1.8Mbps is a rate with a smaller estimated SIR error of the UE obtained by test in the multi-path condition; for dual antennae, this value can be set as 2.3Mbps); and Rate_Limit_Timer is set as 0.

If the UE does not satisfy any condition of steps S408 and S410 within consecutive 16 times, then Rate_Limit_Timer = 16.

According to step S414, when Rate_Limit_Timer >= Rate_Limit_Threshold (according to an actually measured result, Rate_Limit_Threshold is set as 16), then Rate limit = 1.8Mbps + 0.5mops, and Rate_Limit_Timer is set as 0.

If the UE does not satisfy any condition of steps S408 and S410 within consecutive 16 times, then Rate_limit continues to increase until Rate_max = 5.76Mpbs.

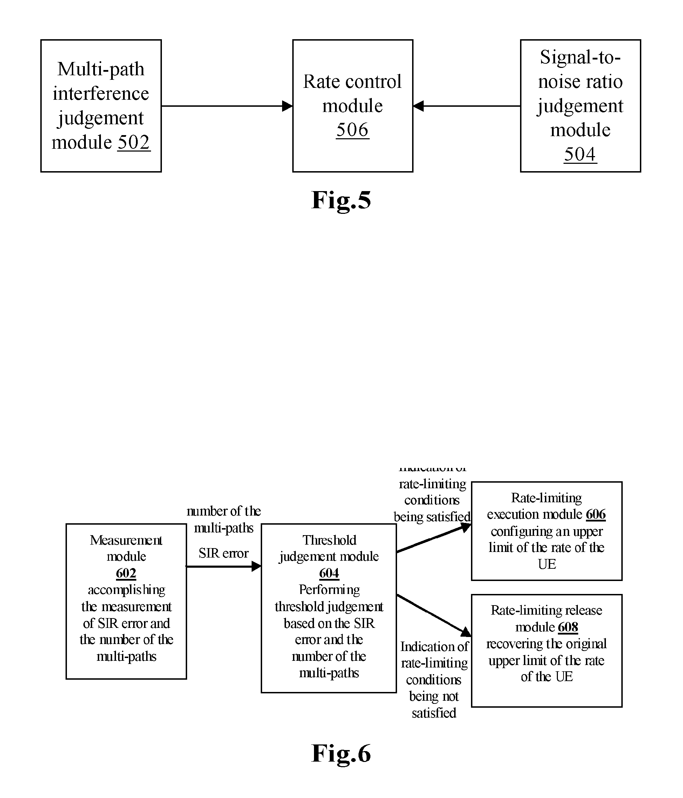

Fig. 5 is a block diagram of a system for controlling uplink rate according to an embodiment of the present invention. As shown in Fig. 5, the system for controlling uplink rate according to the embodiment of the present invention includes: a multi-path interference judgement module 502, for judging whether the multi-path interference condition is satisfied according to the number of antennae of the cell and the number of multi-paths of the user equipment; a signal-to-noise ratio judgement module 504, for judging whether the absolute value of the difference between the estimated signal-to-noise ratio value and the target signal-to-noise ratio value exceeds the normal signal-to-noise ratio error range; and a rate control module 506, for reducing the uplink rate of the user equipment in the case that the multi- path interference condition is satisfied and/or the normal signal-to-noise ratio error range is exceeded.

In the above, the multi-path interference judgement module 502 includes: a threshold judgement module, for determining a threshold of the number of the multi-paths according to the number of the antennae, and judging whether the number of the multi-paths is greater than the threshold of the number of the multi-paths; and a determination module, for determining that the multi-path interference condition is satisfied if the number of the multi-paths is greater than the threshold of the number of the multi-paths.

In the above, the rate control module 506 includes: a first rate control module, for making the rate of the user equipment equal to a constant first rate in the case that the number of the antennae is 1; and a second rate control module, for making the rate of the user equipment equal to a constant second rate in the case that the number of the antennae is 2; wherein, the first rate is not equal to the second rate.

The system further includes: a timing module, for starting a timing procedure in the case that the multi-path interference condition is not satisfied anymore and the normal signal-to-noise ratio error range is not exceeded due to the rate reduction of the user equipment; and a rate-limiting release module, for gradually increasing the rate of the user equipment in the case that the timing value reaches a predetermined time threshold.

In the above, the rate-limiting release module includes: a rate increasing module, for increasing progressively the first rate or the second rate at predetermined intervals; and a rate setting module, for setting, when the progressively increased first rate or second rate is greater than an upper limit value of the rate, the first rate or the second rate as the upper limit value of the rate.

Fig. 6 is a diagram of a functional structure of a system for controlling uplink rate according to an embodiment of the present invention. In another embodiment of the present invention, the system for controlling uplink rate includes: a measurement module 602, a threshold judgement module 604, a rate-limiting execution module 606 and a rate-limiting release module 608.

The measurement module is used for accomplishing the measurement and reporting function of the number of the multi-paths of the UE and the SIR estimation.

The threshold judgement module is used for performing threshold detection according to the number of the multi-paths and the SIR error reported by the measurement module and the number of the antenna for receiving in the cell, and judging whether it is required to execute rate-limiting condition.

The rate-limiting execution module is used for performing a rate limiting control for the UE if the judgement result of the threshold judgement module is that the rate-limiting condition is satisfied.

The rate-limiting release module is used for releasing the rate limiting of the UE if the judgement result of the threshold judgement module is that the rate limiting condition is not satisfied consecutively within a period of time.

The present invention controls the load of the UE by using the multi-path information and the current SIR estimation to reduce the large estimated SIR error of the UE caused by the high multi-path energy, thereby preventing the loss-of-control of the load of the cell.

The descriptions above are only the preferable embodiments of the present invention, which are not used to restrict the present invention. For those skilled in the art, the present invention may have various changes and variations. Any amendments, equivalent substitutions, improvements, etc. within the spirit and principle of the present invention are all included in the scope of the protection of the present invention.

**Claims**

1. A method for controlling uplink rate, **characterized by** comprising steps of:

   judging whether a multi-path interference condition is satisfied according to the number of antennae of a cell and the number of multi-paths of a user equipment;
   judging whether a difference between an estimated signal-to-noise ratio value and a target signal-to-noise ratio value exceeds a normal signal-to-noise ratio error range; and
   reducing the uplink rate of the user equipment in the case that the multi-path interference condition is satisfied and/or the normal signal-to-noise ratio error range is exceeded.

2. The method according to claim 1, **characterized in that** the step of judging whether the multi-path interference condition is satisfied according to the number of antennae of the cell and the number of multi-paths of the user equipment comprises:

   determining a threshold of the number of the multi-paths according to the number of the antennae, and judging whether the number of the multi-paths is greater than the threshold of the number of the multi-paths; and
   if the number of the multi-paths is greater than the threshold of the number of the multi-paths, determining that the multi-path interference condition is satisfied.

**3.** The method according to claim 2, **characterized in that** the step of reducing the rate of the user equipment comprises:

in the case that the number of the antennae is 1, making the rate of the user equipment equal to a constant first rate; and
in the case that the number of the antennae is 2, making the rate of the user equipment equal to a constant second rate;
wherein the first rate is less than the second rate.

**4.** The method according to claim 3, **characterized by** further comprising steps of:

starting a timing procedure in the case that the multi-path interference condition is not satisfied anymore and the normal signal-to-noise ratio error range is not exceeded due to the rate reduction of the user equipment; and
gradually increasing the rate of the user equipment in the case that a timing value reaches a predetermined time threshold.

**5.** The method according to claim 4, **characterized in that** the step of gradually increasing the rate of the user equipment comprises:

increasing progressively the first rate or the second rate at predetermined time intervals; and
when the progressively increased first rate or second rate is greater than an upper limit value of the rate, setting the first rate or the second rate as the upper limit value of the rate.

**6.** A system for controlling uplink rate, **characterized by** comprising:

a multi-path interference judgement module, configured to judge whether a multi-path interference condition is satisfied according to the number of antennae of a cell and the number of multi-paths of a user equipment;
a signal-to-noise ratio judgement module, configured to judge whether an absolute value of a difference between an estimated signal-to-noise ratio value and a target signal-to-noise ratio value exceeds a normal signal-to-noise ratio error range; and
a rate control module, configured to reduce the uplink rate of the user equipment in the case that the multi-path interference condition is satisfied and/or the normal signal-to-noise ratio error range is exceeded.

**7.** The system according to claim 6, **characterized in that** the multi-path interference judgement module comprises:

a threshold judgement module, configured to determine a threshold of the number of the multi-paths according to the number of the antennae, and judge whether the number of the multi-paths is greater than the threshold of the number of the multi-paths; and
a determination module, configured to determine that the multi-path interference condition is satisfied if the number of the multi-paths is greater than the threshold of the number of the multi-paths.

**8.** The system according to claim 7, **characterized in that** the rate control module comprises:

a first rate control module, configured to make the rate of the user equipment equal to a constant first rate in the case that the number of the antennae is 1; and
a second rate control module, configured to make the rate of the user equipment equal to a constant second rate in the case that the number of the antennae is 2;
wherein the first rate is not equal to the second rate.

**9.** The system according to claim 8, **characterized by** further comprising:

a timing module, configured to start a timing procedure in the case that the multi-path interference condition is not satisfied anymore and the normal signal-to-noise ratio error range is not exceeded due to the rate reduction of the user equipment; and
a rate readjustment module, configured to gradually increase the rate of the user equipment in the case that a timing value reaches a predetermined time threshold.

**10.** The system according to claim 9, **characterized in that** the rate-limiting release module comprises:

a rate increasing module, configured to increase progressively the first rate or the second rate at predetermined intervals; and

a rate setting module, configured to set, when the progressively increased first rate or second rate is greater than an upper limit value of the rate, the first rate or the second rate as the upper limit value of the rate.

RTWP$_{target}$

RTWP$_{reference}$

RNC

AG/RG

Node B

UE$_k$

S$_k$/SIR$_k$

RTWP$_{current}$

Cell

**Fig.1**

Other physical channels

## S2ant=3

DPCCH

Other physical channels

## S1ant=2

DPCCH

## N=1

**Fig.2**

Start

S302 : judging whether the multi-path interference condition is satisfied according to the number of antennae of the cell and the number of multi-paths of the user equipment

S304 : judging whether the absolute value of the difference between the estimated signal-to-noise ratio value and the target signal-to-noise ratio value exceeds the normal signal-to-noise ratio error range

S306 : reducing the uplink rate of the user equipment when the multi-path interference condition is satisfied and/or the normal signal-to-noise ratio error range is exceeded

End

**Fig.3**

Start

S402 : setting an upper limit of the rate and a scheduling
rate limit for the UE

S404 : detecting the number of the multi-paths of
the UE

S406 : detecting the estimated SIR value of the UE

S408 : judging whether the number of the multi-
paths of the UE exceeds the threshold

S410 : judging whether the error of the UE exceeds
the threshold

S412 : limiting the rate of the UE when one of the
conditions is satisfied

S414 : gradually releasing rate limit when the
conditions above are not satisfied within a
consecutive period of time

End

**Fig.4**

| Multi-path interference judgement module 502 | → | Rate control module 506 | ← | Signal-to-noise ratio judgement module 504 |

**Fig.5**

| Measurement module 602 accomplishing the measurement of SIR error and the number of the multi-paths | number of the multi-paths SIR error → | Threshold judgement module 604 Performing threshold judgement based on the SIR error and the number of the multi-paths | indication of rate-limiting conditions being satisfied → Indication of rate-limiting conditions being not satisfied → | Rate-limiting execution module 606 configuring an upper limit of the rate of the UE |
| | | | | Rate-limiting release module 608 recovering the original upper limit of the rate of the UE |

**Fig.6**

# INTERNATIONAL SEARCH REPORT

| | International application No. |
|---|---|
| | PCT/CN2010/074682 |

**A. CLASSIFICATION OF SUBJECT MATTER**

H04W 28/08 (2009.01)i

According to International Patent Classification (IPC) or to both national classification and IPC

**B. FIELDS SEARCHED**

Minimum documentation searched (classification system followed by classification symbols)

IPC: H04W, H04Q, H04B,H04J, H04L

Documentation searched other than minimum documentation to the extent that such documents are included in the fields searched

Electronic data base consulted during the international search (name of data base and, where practicable, search terms used)

CNPAT,CNKI,WPI,EPODOC,3GPP: HSUPA, rate, speed, uplink, antenna, multi w path, interference, sir, load, estimate+, target, schedul+

**C. DOCUMENTS CONSIDERED TO BE RELEVANT**

| Category* | Citation of document, with indication, where appropriate, of the relevant passages | Relevant to claim No. |
|---|---|---|
| PX | CN101605358A （ZTE CORPORATION） 16 Dec. 2009(16.12.2009) the whole document | 1-10 |
| A | CN101253700A （NOKIA CORPORATION） 27 Aug. 2008(27.08.2008) the whole document | 1-10 |
| A | CN101119131A （ZTE CORPORATION） 06 Feb. 2008(06.02.2008) the whole document | 1-10 |
| A | CN101035085A （HUAWEI TECHNOLOGIES CO., LTD.） 12 Sep. 2007 (12.09.2007) the whole document | 1-10 |
| A | WO2007/029067A2 （NOKIA CORPORATION et al.） 15 Mar. 2007(15.03.2007) the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 03 Sep. 2010 （03.09.2010） | **21 Oct. 2010 (21.10.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer YANG, Jibin Telephone No. (86-10)62413491 |

Form PCT/ISA /210 (second sheet) (July 2009)

<div align="center">

## INTERNATIONAL SEARCH REPORT
### Information on patent family members

</div>

| | | International application No. |
|---|---|---|
| | | PCT/CN2010/074682 |

| Patent Documents referred in the Report | Publication Date | Patent Family | Publication Date |
|---|---|---|---|
| CN101605358A | 16.12.2009 | None | |
| CN101253700A | 27.08.2008 | US2007030838 A1 | 08.02.2007 |
| | | WO2007029066 A2 | 15.03.2007 |
| | | EP1917732 A2 | 07.05.2008 |
| CN101119131A | 06.02.2008 | None | |
| CN101035085A | 12.09.2007 | WO2008131672A1 | 06.11.2008 |
| WO2007/029067A3 | 15.03.2007 | US2007030829 A1 | 08.02.2007 |
| | | EP1911170 A2 | 16.04.2008 |
| | | INDELNP200801480E | 20.06.2008 |
| | | CN101238647 A | 06.08.2008 |
| | | KR20080034143 A | 18.04.2008 |
| | | JP2009504054T | 29.01.2009 |
| | | ZA200801092 A | 28.01.2009 |
| | | RU2385534 C2 | 27.03.2010 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.Holma ; A.Toskala.** WCDMA for UMTS. John Wiley & Sons